# EUROPÄISCHE PATENTSCHRIFT

(11) **EP 1 643 419 B1**
(45) Veröffentlichungstag und Bekanntmachung des Hinweises auf die Patenterteilung: **22.08.2007**
(21) Anmeldenummer: 04405619.0
(22) Anmeldetag: 04.10.2004
(51) Int. Cl.: G06K 17/00, G06K 19/07

(54) **System und Verfahren zur Erkennung mobiler Objekte**
System and method for detecting mobile objects
Système et procédé pour détecter des objets mobiles

(43) Veröffentlichungstag der Anmeldung: 05.04.2006
(73) Patentinhaber: Swisscom Mobile AG, 3050 Bern (CH)
(72) Erfinder: Cantini, Renato, 1782 Belfaux (CH)
(74) Vertreter: Vogel, Dany

(56) Entgegenhaltungen:
- US-A1- 2004 155 106
- US-B1- 6 657 543

## Beschreibung

### Technisches Gebiet

Die vorliegende Erfindung betrifft ein System und ein Verfahren zur Erkennung mobiler Objekte. Die vorliegende Erfindung betrifft insbesondere ein System und ein Verfahren zur Erkennung mobiler Objekte, in welchen eine mobile tragbare Kennvorrichtung mit einer darin gespeicherten kontaktlos per Funk lesbaren Identifizierung verwendet wird.

### Stand der Technik

Verfahren und Systeme zur Erkennung mobiler Objekte, in welchen eine mobile tragbare Kennvorrichtung mit einer darin gespeicherten kontaktlos per Funk lesbaren Identifizierung verwendet wird, sind bekannt. Solche Kennvorrichtungen sind insbesondere als sogenannte RFID-Tags (Radio Frequency Identification) oder Radiofrequenzidentifizierungsetiketten bekannt und werden an Objekte wie Verkaufsgüter aber auch Personen und selbst Tiere angebracht. Diese Kennvorrichtungen umfassen eine Antenne zum Empfangen eines Lese- oder Befragungssignals sowie zum Zurückleiten eines Antwortsignals. Es gibt solche Kennvorrichtungen in einfacher Ausführung ohne Prozessleistung, bei welchen eine mit der Antenne verbundene integrierte Schaltung vorgesehen ist zum Speichern der Identifizierungsdaten und zum Aussenden der Identifizierungsdaten mit dem Antwortsignal beim Lesen der Kennvorrichtung. Bei aufwendiger ausgeführten Kennvorrichtungen, die beispielsweise als Chipkarten ausgeführt sind, verfügt die integrierte Schaltung über einen programmierbaren Prozessor zur Ausführung von zusätzlichen Applikationen. Typischerweise sind die Kennvorrichtungen passiv und werden mittels Induktion durch externe Lesegeräte elektrisch gespeist. Es gibt auch Kennvorrichtungen, die über eine eigene elektrische Speisung verfügen, beispielsweise eine Solarzelle oder eine Batterie. Die Kennvorrichtungen werden beispielsweise zur Erkennung und zur Verfolgung (sogenanntes Tracking) von Waren und Gütern innerhalb eines Unternehmens (z. B. Fabrik, Warenlager oder Verkaufshaus) oder innerhalb eines Zusammenschlusses mehrerer Betriebe eingesetzt. Es sind auch Anwendungen mit solchen Kennvorrichtungen bekannt, bei denen nicht nur eine Identifizierung kontaktlos per Funk von der Kennvorrichtung-gelesen wird, sondern bei denen auch anwendungsspezifische Daten auf die Kennvorrichtung geschrieben werden.

In der Patentanmeldung WO 00/45324 wird ein Produktionssystem beschrieben, in welchem zu bearbeitende Produkte mit Radiofrequenzidentifizierungsetiketten versehen werden. In verschiedenen Verarbeitungsprozessen werden Informationen von den Radiofrequenzidentifizierungsetiketten gelesen, Verarbeitungsschritte ausgeführt und weitere produktionsrelevante Informationen auf die Radiofrequenzidentifizierungsetiketten geschrieben.

In der Patentanmeldung WO 93/17404 wird ein auf Radiofrequenzidentifizierungsetiketten basiertes Sicherheitssystem beschrieben, in welchem nach der Bezahlung einer Ware entsprechende Informationen in die Radiofrequenzidentifizierungsetikette geschrieben werden und in welchem diese Informationen bei einer Rückgabe der Ware wieder gelöscht werden.

In der Patentschrift US 6,002344 wird ein auf Radiofrequenzidentifizierungsetiketten basiertes Inventarsystem beschrieben, in welchem auf den Radiofrequenzidentifizierungsetiketten jeweils beim Lesen ein Zähler aktiviert wird, dessen Wert bei der Behebung von Lesekollisionen beim Lesen von mehreren Radiofrequenzidentifizierungsetiketten Verwendung findet

In der Patentschrift US 6,657.543 wird ein Trackingsystem beschrieben, in welchem Lesevorrichtungen Daten von RFID-Tags lesen und zur Speicherung an eine Datenbank übermitteln. Die Lesevorrichtungen nach US 6.657,543 sind zudem eingerichtet applikatlonsspezifrsche Daten dynamisch auf die RFID-Tags zu schreiben.

In der Patentanmeldung US 2004/155106 wird ein RFID-Tag beschrieben, der eine Identifizierung mit einem dynamisch veränderbaren Teil aufweist. Der veränderbare Teil der Identifizierung wird nach US 2004/155106 beispielsweise bei einer kontaktlosen Interaktion des RFID-Tags mit einer Lesevorrichtung durch einen Prozess auf dem RFID-Tag geändert. Durch die veränderten Teile der Identifizierung können beispielsweise bestimmte Zustände oder Ereignisse dynamisch angezeigt und in einer Datenbank erfasst werden.

Die Verwendung der Radiofrequenzidentifizierungsetiketten im Zusammenhang mit Personen, z. B. Konsumenten, die Radiofrequenzidentifizierungsetiketten oder Objekte mit Radiofrequenzidentifizierungsetiketten mit sich tragen, ausserhalb der angeführten Unternehmungen stösst jedoch häufig auf Ablehnung, da die Personen durch mitgeführte Kennvorrichtungen überall ver folgbar (traceable) sind, wo entsprechende Lesegeräte installiert sind. Die Verwendung solcher Kennvorrichtungen im Zusammenhang mit Personen wird folglich aus Gründen des Datenschutzes und der Privatsphäre als problematisch erachtet.

In der Patentanmeldung US 2003/0058110 wird ein Patienteninformationssystem beschrieben, in welchem Patienteninformationen auf Radiofrequenzidentfizienrngsetiketten geschrieben und gespeichert werden. Eine Zugriffskontrolle auf die gespeicherten Informationen wird durch einen Schalter erreicht, durch welchen die Übertragungsbereitschaft der Radiofrequenzidentifizierungsetikette deaktivierbar ist.

### Darstellung der Erfindung

Es ist eine Aufgabe der vorliegenden Erfindung ein Systemfahren zur Erkennung mobiler Objekte vorzuschlagen, in welchen mobile tragbare Kennvorrichtungen mit einer jeweils darin gespeicherten kontaktlos per Funk lesbaren Identifizierung verwendet werden, ohne dass das System und das Verfahren die Nachteile des Standes der Technik aufweisen. Insbesondere ist es eine Aufgabe der vorliegenden Erfindung, ein System und ein Verfahren zur Erkennung mobiler Objekte, basierend auf mobilen tragbaren Kennvorrichtungen vorzuschlagen, welche kein direktes Tracking der mobilen Objekte durch ein einzelnes Unternehmen über das betreffende Unternehmen hinaus zulassen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass die kontaktlos per Funk lesbare gespeicherte Identifizierung in der mobilen tragbaren Kennvorrichtung dynamisch veränderbar ist, dass eine neue Identifizierung bestimmt wird, und dass bei einer Interaktion der Kennvorrichtung mit einer zur Kennvorrichtung externen Schnittstellenvorrichtung die gespeicherte Identifizierung in der Kennvorrichtung durch die bestimmte neue Identifizierung ersetzt wird. Die mobile tragbare Kennvorrichtung ist vorzugsweise als Radiofrequenzidentifizierungsetikette ausgeführt. Die Schnittstellenvorrichtung übermittelt eine zum Ersetzen verwendete neue Identifizierung an ein Computersystem und das Computersystem ordnet die übermittelte neue Identifizierung einer Referenzidentifizierung der Kennvorrichtung zu. Die dynamische Änderung der gespeicherten Identifizierung in der Kennvorrichtung jeweils bei einer Interaktion der Kennvorrichtung mit einer Schnittstellenvorrichtung, z. B. eine Lesevorrichtung, hat den Vorteil, dass es für die Betreiber der Schnittstellenvorrichtungen nicht möglich ist, ein Objekt und insbesondere eine Person mit diesem Objekt auf Grund seiner Kennvorrichtung über mehrere Schnittstellenvorrichtungen hinweg zu verfolgen und so den Weg des Objekts respektive der Person von Schnittstellenvorrichtung zu Schnittstellenvorrichtung aufzuzeichnen. Es ist zwar möglich das Objekt respektive die Person auf Grund seiner Kennvorrichtung respektive auf Grund seiner Identifizierung (die beispielsweise eine elektronische Signatur umfasst) als berechtigtes und ausgewiesenes Objekt respektive Person zu erkennen, jedoch können seine Wege und Gewohnheiten nicht mehr verfolgt und erfasst werden.

In einer Ausführungsvariante ist die Schnittstellenvorrichtung Bestandteil des Systems. Die Schnittstellenvorrichtung ist eingerichtet zum kontaktlosen Lesen der Identifizierung in der Kennvorrichtung, zum anschliessenden Bestimmen einer Identifizierung aus einer der Schnittstellenvorrichtung zugeordneten Liste und zum kontaktlosen Schreiben der bestimmten Identifizierung per Funk in die Kennvorrichtung als neue Identifizierung zum Ersetzen der gespeicherten Identifizierung. Diese Ausführungsvariante hat den Vorteil, dass die Kennvorrichtung einfach und kostengünstig ausgeführt werden kann. Für die dynamische Änderung der gespeicherten Identifizierung braucht die Kennvorrichtung bloss so ausgestaltet zu werden, dass die Identifizierung von einer externen Schnittstellenvorrichtung kontaktlos per Funk schreibbar ist.

In einer alternativen Ausführungsvariante sind die Mittel zur Bestimmung der neuen Identifizierung und zum Ersetzen der gespeicherten Identifizierung mit der bestimmten neuen Identifizierung in der Kennvorrichtung angeordnet und werden durch eine Leseinteraktion mit der zur Kennvorrichtung externen Schnittstellenvorrichtung aktiviert. Das heisst, die mobile tragbare Kennvorrichtung ist eingerichtet, auf Grund einer Aktivierung durch eine Leseinteraktion mit der Schnittstellenvorrichtung die neue Identifizierung automatisch selber zu bestimmen und die gespeicherte Identifizierung in der Kennvorrichtung mit der bestimmten neuen Identifizierung zu ersetzen. Diese Ausführungsvariante erfordert zwar eine leistungsfähigere und teurere Ausführung der Kennvorrichtung, dafür müssen jedoch keine Identifizierungslisten erzeugt, an die Schnittstellenvorrichtung übermittelt und dort verwaltet werden.

In einer Ausführungsvariante ist die Schnittstellenvorrichtung eingerichtet, eine in der Kennvorrichtung gelesene frühere Identifizierung und eine zum Ersetzen der gelesenen Identifizierung verwendete neue Identifizierung einander zugeordnet an ein Computersystem zu übermitteln. Das Computersystem ist eingerichtet, die übermittelte neue Identifizierung auf Grund der zugeordneten übermittelten früheren Identifizierung einer Referenzidentifizierung zuzuordnen. Durch die Übermittlung der früheren Identifizierung und der ersetzenden neuen Identifizierung von der Schnittstellenvorrichtung an das Computersystem ist es möglich, die sich dynamisch ändernden Identifizierungen in einem von den Schnittstellenvorrichtungen unabhängigen Computersystem zu erfassen. Das heisst, die sich ändernden Identifizierungen einer Kennvorrichtung können im Computersystem einer Referenzidentifizierung zugeordnet werden. Dadurch ist es letztlich möglich ein Objekt respektive eine Person auf einer von den Betreibern der Schnittstellenvorrichtungen losgelösten höheren Ebene (auf der Ebene des Computersystems einer TTP - Trusted Third Party) zu verfolgen.

In einer Ausführungsvariante umfasst das System ein Computersystem, welches eingerichtet ist, eine von der Schnittstellenvorrichtung in der Kennvorrichtung gelesene und an das Computersystem übermittelte neue Identifizierung einer Referenzidentifizierung zuzuordnen. Dadurch, dass auf Grund einer neuen Identifizierung der Kennvorrichtung Rückschlüsse auf die Referenzidentifizierung des betreffenden Objekts respektive Person gezogen werden können, kann die Referenzidentifizierung ohne Übermittlung der früheren Identifizierung einzig auf Grund der neuen Identifizierung bestimmt werden. Es muss dazu allerdings sichergestellt werden, dass der Rückschluss kryptografisch gesichert ist und nur durch das Computersystem durchgeführt werden kann.

In einer Ausführungsvariante ist das Computersystem eingerichtet, die Referenzidentifizierung, die der übermittelten neuen Identifizierung zugeordnet ist, an eine Kommunikationseinheit zu leiten. Die Kommunikationseinheit ist eingerichtet, eine Datenanfrage über ein Mobilfunknetz an ein mobiles Kommunikationsendgerät zu übermitteln, dessen Rufnummer der Referenzidentifizierung zugeordnet ist. Die Zuordnung der Rufnummer des mobilen Kommunikationsendgeräts zu der Referenzidentifizierung ist in einer Datenstruktur des Systems gespeichert. Die Kennvorrichtung ist vorzugsweise im oder am Kommunikationsendgerät angeordnet, wobei dazu keine elektrische Kopplung zwischen Kennvorrichtung und Kommunikationsendgerät notwendig ist. Durch die Zuordnung der Referenzidentifizierung zu einer Rufnummer eines mobilen Kommunikationsendgeräts einer Person und durch die Übermittlung einer Datenanfrage an dieses Kommunikationsendgeräts ist es möglich, von der Person bei der Interaktion seiner Kennvorrichtung mit der Schnittstellenvorrichtung automatisch Bestätigungs- und/oder Authentifizierungsdaten anzufordern. Die angeforderten Daten können überprüft werden, beispielsweise durch eine Einheit des Betreibers des Mobilfunknetzes oder im Computersystem, und das Resultat und/oder die Daten können an die Schnittstellenvorrichtung weitergeleitet werden. Das heisst, es wird eine personenspezifische Authentifizierung der Kennvorrichtung ermöglicht.

In einer Ausführungsvariante ist die Schnittstellenvorrichtung eingerichtet, die neue Identifizierung zusammen mit einer Dienstanbieteridentifizierung an das Computersystem zu übermitteln. Das Computersystem ist eingerichtet, die übermittelte Dienstanbieteridentifizierung, die übermittelte neue Identifizierung und die zugeordnete Referenzidentifizierung einander zugeordnet als Eintrag in einem chronologischen Log zu speichern. Zudem ist das Computersystem eingerichtet, auf Grund der übermittelten Dienstanbieteridentifizierung und auf Grund von Einträgen im chronologischen Log einen Kontext zu ermitteln und aus dem chronologischen Log eine kontextspezifische alte Identifizierung zu bestimmen. Die bestimmte alte Identifizierung wird vom Computersystem als Alias-Identifizierung für die Kennvorrichtung an die Schnittstellenvorrichtung übermittelt. Durch die Bestimmung und Übermittlung der Alias-Identifizierung wird ermöglicht, dass angefangene und unterbrochene Verfahrensabläufe beispielsweise innerhalb eines begrenzten Zeitraums, nahtlos fortgesetzt werden können, auch wenn das Objekt respektive die Person beispielsweise zwischenzeitlich einen anderen Dienstanbieter aufgesucht hat.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch eine Kennvorrichtung und eine interagierende Schnittstellenvorrichtung illustriert, wobei die Schnittstellenvorrichtung mit einem Computersystem verbunden ist, das über ein Mobilfunknetz mit einem mobilen Kommunikationsendgerät verbindbar ist.
Figur 2 zeigt ein Zeitdiagramm, das den Signal- und Datenaustausch zwischen einer Kennvorrichtung, einer Schnittstellenvorrichtung, einem Computersystem und einem mobilen Kommunikationsendgerät illustriert.
Die Figuren 3a, 3b und 3c zeigen Zeitdiagramme, die verschiedene Ausführungsvarianten des Signal- und Datenaustauschs zwischen einer Kennvorrichtung und einer Schnittstellenvorrichtung illustrieren.
Figur 4 zeigt ein Blockdiagramm, welches schematisch ein Beispiel einer Kennvorrichtung mit einer Antenne und einem integrierten Schaltkreis illustriert.

### Wege zur Ausführung der Erfindung

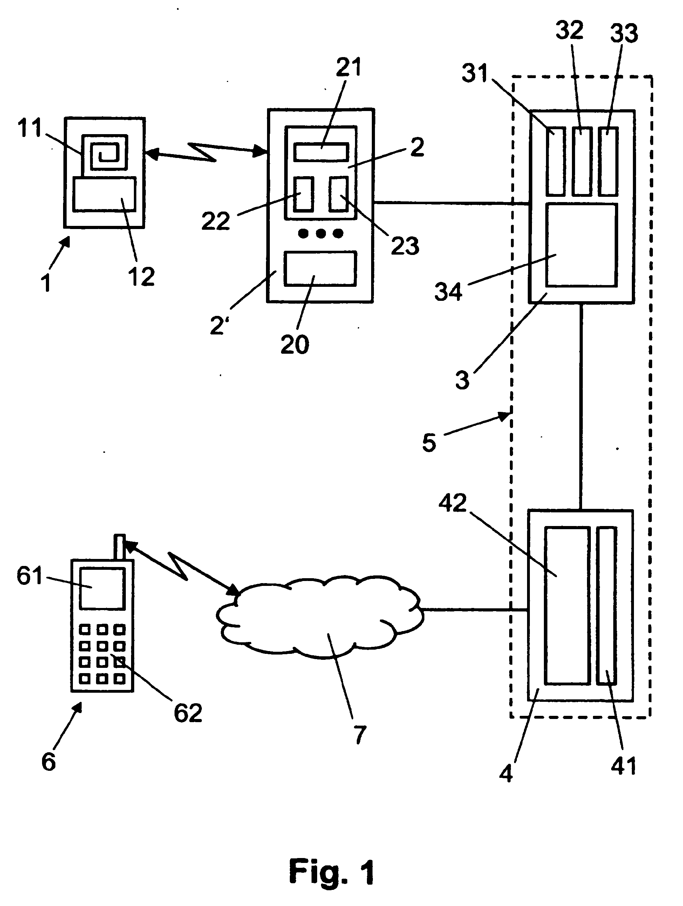

In der Figur 1 bezeichnet das Bezugszeichen 1 eine tragbare mobile Kennvorrichtung, die eine Antenne 11 und einen damit verbundenen integrierten Schaltkreis 12 umfasst. Die Kennvorrichtung 1 ist so dimensioniert, dass sie in der Hand gehalten werden kann (d.h. die Kennvorrichtung 1 ist als sogenannter "hand-held device" ausgestaltet) und/ einfach an Objekten oder Personen angebracht werden kann. Die Kennvorrichtung 1 kann selbst so ausgestaltet sein, dass sie an oder in Tieren angebracht werden kann. Die Kennvorrichtung 1 ist vorzugsweise als Chipkarte ausgeführt, sie kann jedoch auch in anderer Form ausgeführt sein, beispielsweise als (Klebe-)Etikette, als Anhänger oder als Armband. Die Kennvorrichtung 1 verkörpert eine sogenannte Radiofrequenzidentifizierungsetikette, die auch als RFID-Tag bezeichnet wird. Zum besseren Verständnis werden Identifizierungen für die Kennvorrichtung 1 in der nachfolgenden Beschreibung jeweils als RF-Identifizierung bezeichnet.

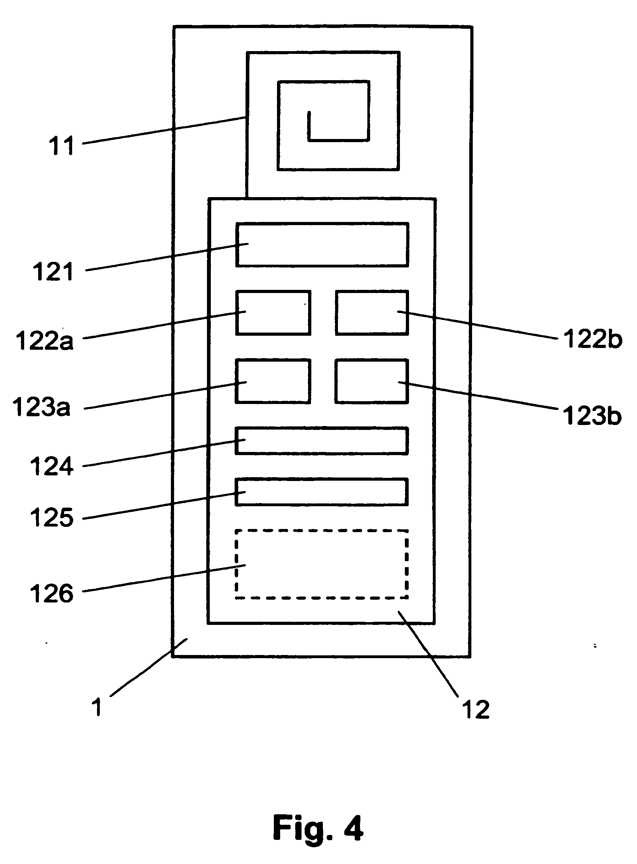

In der Figur 4 ist ein Beispiel der Kennvorrichtung 1 detailliert dargestellt. Der Schaltkreis 12 ist eingerichtet, über die Antenne 11 Lesesignale und andere Instruktionssignale entgegenzunehmen, die von der Schnittstellenvorrichtung 2 per Funk ausgesendet werden. Der Schaltkreis 12 umfasst ein Kommunikationsmodul 121, das eingerichtet ist, die empfangenen Lese- und Instruktionssignale zu erkennen und entsprechend den Signalen zugeordnete definierte Funktionen auszuführen. In der einfachsten Ausführungsvariante sendet die Kennvorrichtung 1 eine gespeicherte RF-Identifizierung als Antwortsignal auf ein Lesesignal über die Antenne 11 aus und speichert eine mittels eines Schreibsignals übermittelte neue RF-Identifizierung in der Kennvorrichtung 1. Für die Ausführung zusätzlicher weiterer Funktionen, die später beschrieben werden, umfasst eine komplexere Ausführung der Kennvorrichtung 1 ein Prozessormodul 126. Das Prozessormodul 126 ist beispielsweise als programmierter Prozessor oder als Modul mit sogenannter "hard-" oder "firmwired-logic" ausgeführt. In der komplexeren Ausführung werden empfangene Signale zur weiteren Verarbeitung an das Prozessormodul 126 weitergeleitet. Der Schaltkreis 12 umfasst mehrere Datenspeicher 122a, 122b, 123a, 123b zur Speicherung von jeweils einer RF-Identifizierung. Die RF-Identifizierungen werden vorzugsweise als digitale Datenwerte gespeichert. Um die Integrität einer neuen RF-Identifizierung überprüfen zu können, wird die neue RF-Identifizierung zweimal hintereinander übermittelt und in der Kennvorrichtung 1 in zwei verschiedene Datenspeicher 122a und 122b respektive 123a und 123b gespeichert. Der Schaltkreis 12 umfasst ein Integritätsprüfmodul 125, welches eingerichtet ist, die Übereinstimmung einer neu in den Datenspeicher 122a respektive 123a geschriebenen RF-Identifizierung mit der doppelt in den Datenspeicher 122b respektive 123b geschriebenen neuen RF-Identifizierung zu überprüfen. Bei einer Übereinstimmung der neuen RF-Identifizierung in beiden Speichern 122a und 122b respektive 123a und 123b wird die neue RF-Identifizierung durch entsprechendes Setzen des Indikators 124 als gültige aktuelle RF-Identifizierung der Kennvorrichtung 1 angezeigt. Zum Beispiel zeigt der Indikator 124 auf den Speicher 122a respektive 123a mit der neuen RF-Identifizierung. Bei fehlender Übereinstimmung der neuen RF-Identifizierung in den beiden Speichern 122a und 122b respektive 123a und 123b wird der Indikator 124 nicht geändert, das heisst er zeigt weiterhin auf den Speicher 123a und 123b respektive 122a und 122b, wo die alte (frühere) RF-Identifizierung gespeichert ist.

Wie in der Figur 1 ersichtlich ist, umfasst die Schnittstellenvorrichtung 2 ein Schreib/Lesemodul 21, das eingerichtet ist, Lesesignale und andere Instruktionssignale, insbesondere Schreibsignale, per Funk an die Kennvorrichtung 1 zu übermitteln. Das Schreib/Lesemodul 21 ist zudem eingerichtet, Antwortsignale, die von der Kennvorrichtung per Funk ausgesendet werden, zu empfangen, zu erkennen und zur Auswertung an das Kontrollmodul 22 weiterzuleiten. Das Kontrollmodul 22 umfasst vorzugsweise einen Prozessor, Daten- und Programmspeicher sowie mehrere programmierte Funktionsmodule (Softwaremodule) zur Steuerung des Prozessors. Die Funktionalität der Funktionsmodule wird später mit Bezug zu den Zeitdiagrammen detailliert beschrieben. Der Fachmann wird verstehen, dass das Kontrollmodul 22 auch vollständig hardwaremässig ausgeführt werden kann.

Wie in der Figur 1 durch das Bezugszeichen 2' angedeutet wird, kann die Schnittstellenvorrichtung 2 auch stellvertretend für einen Verbund 2' von mehreren Schnittstellenvorrichtungen 2 stehen, die mit einer computerbasierten Steuervorrichtung 20 eines Dienstanbieters verbunden sind.

In der Figur 1 bezeichnet das Bezugszeichen 5 ein Computersystem das einen oder mehrere Server 3, 4 umfasst. In den nachfolgenden Erläuterungen bezieht sich das Bezugszeichen 3 auf einen TTP-Server, der durch eine vertrauenswürdige Drittpartei (Trusted Third Party, TTP) betrieben wird, und das Bezugszeichen 4 bezieht sich auf einen MNO-Server, der als Kommunikationseinheit dient und der durch einen Betreiber des Mobilfunknetzes 7 betrieben wird (Mobile Network Operator, MNO). Es soll hier jedoch klar festgehalten werden, dass die nachfolgend beschriebenen Funktionen des TTP-Servers 3 und des MNO-Servers 4 in einer alternativen Ausführung auch auf einem gemeinsamen Server des Computersystems 5 ausgeführt werden können.

Der TTP-Server 3 umfasst einen Regeldatenspeicher 31, in welchem verschiedene Verarbeitungsregeln Dienstanbietem zugeordnet sind, einen Identifizierungsspeicher 32, in welchem Identifizierungslisten Dienstanbietem oder Schnittstellenvorrichtungen 1 zugeordnet sind, und einen chronologischen Log 33, in welchem RF-Identifizierungen und zugeordnete Referenzidentifizierungen einer Kennvorrichtung 1 einander zugeordnet gespeichert sind. Damit das nachfolgend beschriebene Verfahren ausgeführt werden kann, muss eine Kennvorrichtung 1 mit seiner ursprünglichen RF-Identifizierung im TTP-Server 3 registriert werden, dabei wird der ursprünglichen RF-Identifizierung (und damit der betreffenden Kennvorrichtung 1) im TTP-Server 3 eine eindeutige Referenzidentifizierung zugeordnet und diese Zuordnung im TTP-Server 3 gespeichert. Der TTP-Server 3 umfasst zudem ein Verwaltungsmodul 34, das als programmiertes Softwaremodul ausgeführt ist und dessen Funktionen später mit Bezug zu den Zeitdiagrammen detaillierter beschrieben werden.

Der MNO-Server 4 umfasst einen Teilnehmerspeicher 41, in welchem die Rufnummern von mobilen Kommunikationsendgeräten 6 registrierter Teilnehmer des Mobilfunknetzes 7 jeweils einer Referenzidentifizierung einer Kennvorrichtung 1 zugeordnet sind. Die Rufnummern sind beispielsweise MSISDN-Nummem (Mobile Subscriber Integrated System Digital Network). Der MNO-Server 4 umfasst zudem ein Dialogmodul 42, das als programmiertes Softwaremodul ausgeführt ist und das später mit Bezug zu den Zeitdiagrammen detaillierter beschrieben wird.

Das Mobilfunknetz 7 umfasst beispielsweise ein GSM- (Global System for Mobile Communications) oder UMTS-Mobilfunknetz (Universal Mobile Telecommunications System) oder ein anderes Mobilfunknetz, beispielsweise ein satellitenbasiertes Mobilfunknetz oder ein WLAN (Wireless Local Area Network).

Das mobile Kommunikationsendgerät 6 umfasst ein Kommunikationsmodul zur Kommunikation über das Mobilfunknetz 7 sowie ein Benutzeridentifizierungsmodul, ein sogenanntes SIM (Subscriber Identity Module), das Vorzugsweise als Chipkarte ausgeführt ist. Die Kennvorrichtung 1 ist vorzugsweise aber nicht notwendigerweise am oder im mobilen Kommunikationsendgerät 6 angeordnet. Die Kennvorrichtung 1 ist jedoch vorzugsweise nicht mit dem mobilen Kommunikationsendgerät 6 elektrisch gekoppelt.

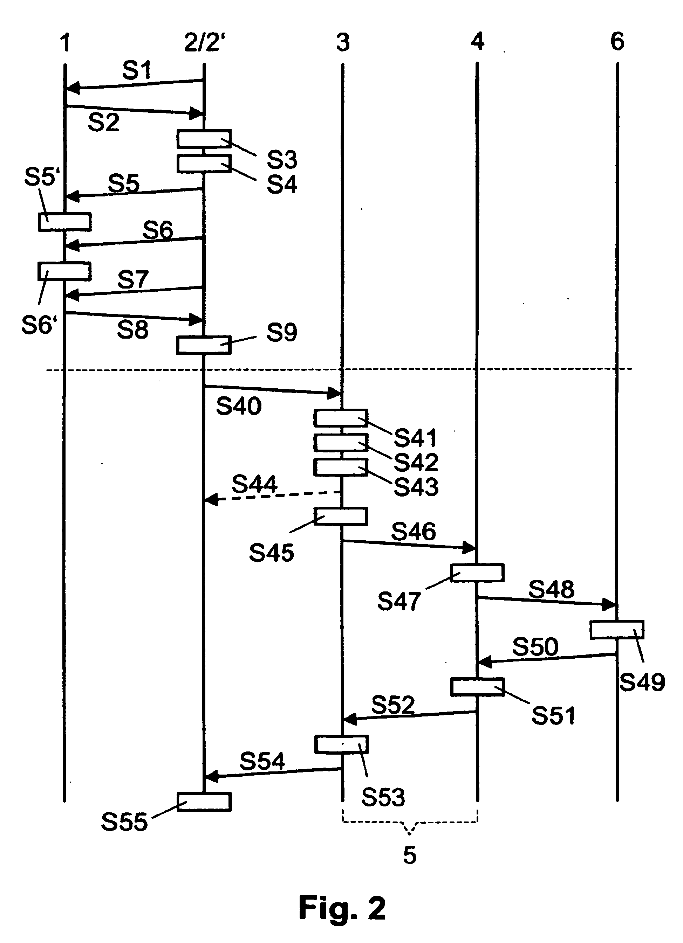

In den folgenden Abschnitten wird mit Bezug zu Figur 2 der Signal- und Datenaustausch zwischen der Kennvorrichtung 1 und der Schnittstellenvorrichtung 2, zwischen der Schnittstellenvorrichtung 2 (respektive der Steuervorrichtung 2') und dem Computersystem 5 (respektive dem TTP-Server 3), zwischen dem TTP-Server 3 und dem MNO-Server 4, sowie zwischen dem Computersystem 5 (respektive dem MNO-Server 4) und dem mobilen Kommunikationsendgerät 6 beschrieben. An dieser Stelle soll klar festgehalten werden, dass die nachfolgend beschriebenen Schrittfolgen beispielhaft angeführt sind und nicht einschränkend zu verstehen sind, da der Fachmann weitere mögliche alternative Schrittfolgen im Rahmen der vorliegenden Erfindung finden kann.

Im Schritt S1 sendet die Schnittstellenvorrichtung 2 ein Lesesignal aus, das von der Kennvorrichtung 1 empfangen wird.

Im Schritt S2 sendet die Kennvorrichtung 1 die gespeicherte aktuelle RF-Identifizierung als Antwortsignal auf das Lesesignal über die Antenne 11 aus. Die ausgesendete RF-Identifizierung wird in der Schnittstellenvorrichtung 2 empfangen.

Im Schritt S3 speichert die Schnittstellenvorrichtung 2 die im Schritt S2 übermittelte RF-Identifizierung als alte (frühere) RF-Identifizierung.

Im Schritt S4 bestimmt die Schnittstellenvorrichtung 2 aus einer im Datenspeicher 23 gespeicherten Liste von RF-Identifizierungen die nächste zu vergebende RF-Identifizierung. Die Liste der RF-Identifizierungen wird in einer früheren Phase vorbereitend vom Computersystem 5 respektive vom TTP-Server 3 an die Schnittstellenvorrichtung 2 übertragen, gegebenenfalls über die Steuervorrichtung 20. Die Liste der RF-Identifizierungen wird vom Computersystem 5 respektive vom TTP-Server 3 aus dem Identifizierungsspeicher 32 bestimmt. Im Identifizierungsspeicher 32 wird auch nachgeführt, welche Identifizierungslisten welchen Dienstanbietem oder Schnittstellenvorrichtungen 1 zugewiesen wurden.

Im Schritt S5 sendet die Schnittstellenvorrichtung 2 ein Schreibsignal mit der im Schritt S4 bestimmten neuen RF-Identifizierung aus. Die neue RF-Identifizierung wird von der Kennvorrichtung 1 empfangen und im Schritt S5' im Datenspeicher 123a gespeichert.

Im Schritt S6 sendet die Schnittstellenvorrichtung 2 erneut ein Schreibsignal mit der im Schritt S4 bestimmten neuen RF-Identifizierung aus. Die erneut übermittelte neue RF-Identifizierung wird von der Kennvorrichtung 1 empfangen und im Schritt S6' im Datenspeicher 123b gespeichert. Im Schritt S6' überprüft das Integritätsprüfmodul 125 zudem die Übereinstimmung der in den Datenspeichern 123a und 123b gespeicherten neuen RF-Identifizierungen. Bei einer Übereinstimmung wird der Indikator 124 so gesetzt, das er die im Datenspeicher 123a gespeicherte neue RF-Identifizierung als aktuelle RF-Identifizierung der Kennvorrichtung 1 anzeigt. Bei fehlender Übereinstimmung bleibt weiterhin die im Datenspeicher 122a gespeicherte RF-Identifizierung die aktuelle RF-Identifizierung der Kennvorrichtung 1. Die erneute Übermittlung und die Überprüfung der RF-Identifizierung gemäss den Schritten S6, S6' sind optional und können in einer Variante auch mehrfach wiederholt werden.

Im Schritt S7 sendet die Schnittstellenvorrichtung 2 ein Lesesignal aus, das von der Kennvorrichtung 1 empfangen wird.

Im Schritt S8 sendet die Kennvorrichtung 1 die gespeicherte aktuelle RF-Identifizierung als Antwortsignal auf das Lesesignal über die Antenne 11 aus. Die ausgesendete RF-Identifizierung wird in der Schnittstellenvorrichtung 2 empfangen.

Im Schritt S9 überprüft die Schnittstellenvorrichtung 2 die Übereinstimmung der in den Schritten S5 und S6 ausgesendeten neuen RF-Identifizierung mit der in Schritt S8 empfangenen aktuellen RF-Identifizierung der Kennvorrichtung 1. Bei einer Übereinstimmung stellt die Schnittstellenvorrichtung 2 einen Datenbeleg zur Übermittlung an das Computersystem 5 respektive an den TTP-Server 3 bereit und fährt im Schritt S40 fort. Der Datenbeleg umfasst die im Schritt S8 übermittelte aktuelle (neue) RF-Identifizierung, die im Schritt S3 gespeicherte alte (frühere) RF-Identifizierung, eine Dienstanbieteridentifizierung, die den Betreiber der Schnittstellenvorrichtung 2 bestimmt, sowie einen Authentifizierungsgrad, der einen gewünschten Grad der Authentifizierung festlegt. Bei fehlender Übereinstimmung stellt die Schnittstellenvorrichtung 2 einen Schreibfehler fest und zeigt diesen Fehler an und/oder wiederholt den Schreibversuch.

In einer Ausführungsvariante wird der Schreibzugriff auf die Kennvorrichtung 1 durch das Prozessormodul 126 kontrolliert. Zu diesem Zweck überprüft das Prozessormodul 126 ob gewisse Segmente der neuen RF-Identifizierung mit entsprechenden Segmenten übereinstimmen, die in der Kennvorrichtung 1 gespeichert sind. Solche Segmente können zum Beispiel Protokollidentifizierungen, Dienstanbieteridentifizierungen oder Anwendungsidentifizierungen sein. Das Prozessormodul 126 überprüft zu Authentifizierungszwecken mittels eines gespeicherten öffentlichen Schlüssels auch eine in der neuen RF-Identifizierung enthaltene elektronische Signatur. Der Fachmann wird verstehen, dass auch weitere Mechanismen für die Kontrolle des Schreibzugriffs verwendet werden können, beispielsweise die Überprüfung von in der neuen RF-Identifizierung enthaltenen Zeitangaben und/oder Sequenznummern. Das Prozessormodul 126 verweigert den Schreibzugriff bei mangelnder Übereinstimmung oder Aktualität und bei fehlender Authentizität. In der Tabelle 1 ist ein möglicher Aufbau einer RF-Identifizierung dargestellt.

**Tabelle 1**

| RF-Identifizierung | | | | | |
|---|---|---|---|---|---|
| Statischer Teil | | Dynamischer Teil | | | |
| Schema- oder Protokollidentifizierung | Gruppen-, Anwendungs-, oder Dienstanbieteridentifizierung | Eindeutige Identifizierung | | Zeitangabe oder Sequenznummer | Elektronische Signatur |
| | | Sequenzieller Teil | Zufälliger Teil (random) | | |
| unverschlüsselt | unverschlüsselt | möglicherweise verschlüsselt | möglicherweise verschlüsselt | unverschlüsselt | unverschlüsselt |

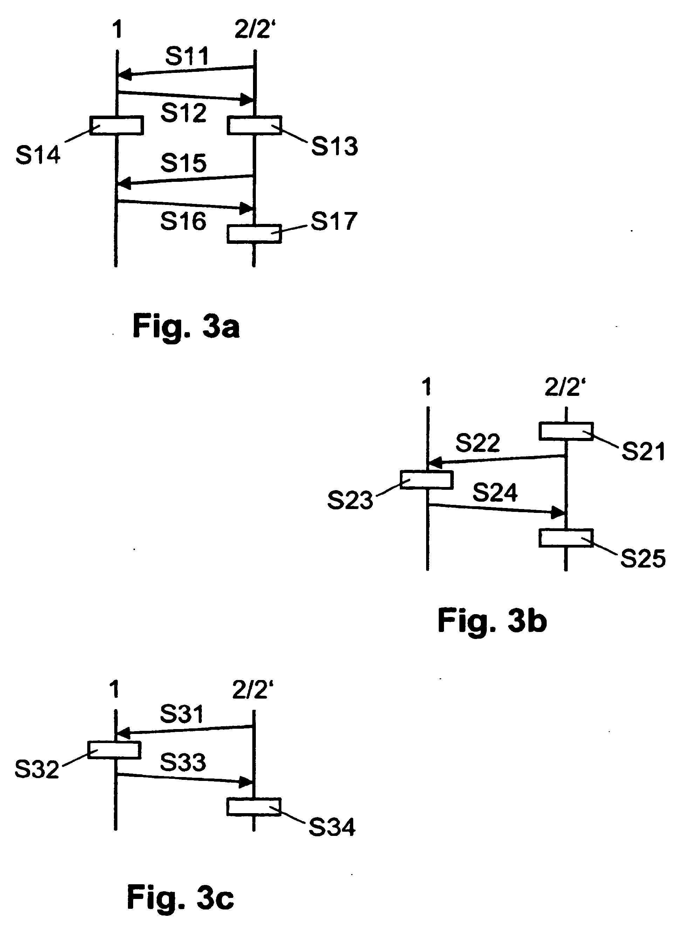

Mit Bezug zu den Figuren 3a, 3b, und 3c werden verschiedene weitere Ausführungsvarianten für den Signal- und Datenaustausch zwischen der Kennvorrichtung 1 und der Schnittstellenvorrichtung 2 beschrieben. Den Ausführungen gemäss den Figuren 3a, 3b und 3c ist gemeinsam, dass eine neue RF-Identifizierung nicht von der Schnittstellenvorrichtung 2 an die Kennvorrichtung übermittelt wird, sondern dass die neue RF-Identifizierung jeweils durch das Prozessormodul 126 direkt in der Kennvorrichtung 1 erzeugt wird.

Wie in der Figur 3a dargestellt ist, sendet die Schnittstellenvorrichtung 2 im Schritt S11 ein Lesesignal aus, das von der Kennvorrichtung 1 empfangen wird.

Im Schritt S12 sendet die Kennvorrichtung 1 die gespeicherte aktuelle RF-Identifizierung als Antwortsignal auf das Lesesignal über die Antenne 11 aus. Die ausgesendete RF-Identifizierung wird in der Schnittstellenvorrichtung 2 empfangen.

Im Schritt S13 speichert die Schnittstellenvorrichtung 2 die im Schritt S12 übermittelte RF-Identifizierung als alte (frühere) RF-Identifizierung.

Aktiviert durch die Leseinteraktion mit der Schnittstellenvorrichtung 2 erzeugt das Prozessormodul 126 im Schritt S14 eine neue RF-Identifizierung und speichert sie als aktuelle RF-Identifizierung der Kennvorrichtung 1 ab. Die erzeugte RF-Identifizierung enthält einen durch einen Zufallsprozess erzeugten Teil, der nicht aus einer früheren RF-Identifizierung der Kennvorrichtung 1 ableitbar ist.

Im Schritt S15 sendet die Schnittstellenvorrichtung 2 erneut ein Lesesignal aus, das von der Kennvorrichtung 1 innerhalb eines definierten Zeitraums seit dem Empfang des im Schritt S11 übermittelten Lesesignals empfangen wird.

Im Schritt S16 wird die gespeicherte aktuelle RF-Identifizierung von der Kennvorrichtung 1 als Antwortsignal auf das Lesesignal an die Schnittstellenvorrichtung 2 übermittelt. Weil das im Schritt S15 übermittelte Lesesignal innerhalb eines definierten Zeitraums nach dem im Schritt S11 übermittelten Lesesignal empfangen wird oder weil das Lesesignal hintereinander von der gleichen Schnittstellenvorrichtung 2 empfangen wird, wird vom Prozessormodul 126 nicht erneut eine neue RF-Identifizierung erzeugt.

Im Schritt S17 stellt die Schnittstellenvorrichtung 2 einen Datenbeleg zur Übermittlung an das Computersystem 5 respektive an den TTP-Server 3 bereit und fährt im Schritt S40 fort. Der Datenbeleg umfasst die im Schritt S16 übermittelte aktuelle (neue) RF-Identifizierung, die im Schritt S13 gespeicherte alte (frühere) RF-Identifizierung, die Dienstanbieteridentifizierung und den Authentifizierungsgrad. Bei fehlender Übereinstimmung stellt die Schnittstellenvorrichtung 2 einen Schreibfehler fest und zeigt diesen Fehler an und/oder wiederholt den Schreibversuch.

Wie in der Figur 3b dargestellt ist, bestimmt die Schnittstellenvorrichtung 2 im Schritt S21 aus einer im Datenspeicher 23 gespeicherten Liste von Lesecodes den nächsten zu verwendenden Lesecode. Die Liste der Lesecodes wird in einer früheren Phase vorbereitend vom Computersystem 5 respektive vom TTP-Server 3 an die Schnittstellenvorrichtung 2 übertragen, gegebenenfalls über die Steuervorrichtung 20.

Im Schritt 22 sendet die Schnittstellenvorrichtung 2 ein Lesesignal mit dem bestimmten Lesecode aus. Das Lesesignal und der Lesecode werden von der Kennvorrichtung 1 empfangen.

Aktiviert durch das Lesesignal des Schritts 22, erzeugt das Prozessormodul 126 im Schritt S23 basierend auf dem empfangenen Lesecode eine neue RF-Identifizierung und speichert sie als aktuelle RF-Identifizierung der Kennvorrichtung 1 ab. Die RF-Identifizierung wird beispielsweise basierend auf dem empfangenen Lesecode mittels einer Hash-Funktion aus einem in der Kennvorrichtung gespeicherten Kenndatensatz erzeugt.

Im Schritt S24 wird die gespeicherte aktuelle RF-Identifizierung von der Kennvorrichtung 1 als Antwortsignal auf das Lesesignal an die Schnittstellenvorrichtung 2 übermittelt.

Im Schritt S25 stellt die Schnittstellenvorrichtung 2 einen Datenbeleg zur Übermittlung an das Computersystem 5 respektive an den TTP-Server 3 bereit und fährt im Schritt S40 fort. Der Datenbeleg umfasst den im Schritt S21 bestimmten Lesecode, die im Schritt S24 übermittelte aktuelle (neue) RF-Identifizierung, die Dienstanbieteridentifizierung und den Authentifizierungsgrad.

Wie in der Figur 3c dargestellt ist, sendet die Schnittstellenvorrichtung 2 im Schritt S31 ein Lesesignal, das von der Kennvorrichtung 1 empfangen wird.

Aktiviert durch das Lesesignal des Schritts 31, erzeugt das Prozessormodul 126 im Schritt S32 eine neue RF-Identifizierung und speichert sie als aktuelle RF-Identifizierung der Kennvorrichtung 1 ab. Aus der erzeugten RF-Identifizierung kann mittels eines geheimen kryptografischen Schlüssels eine Referenzidentifizierung der Kennvorrichtung 1 hergeleitet werden.

Im Schritt S33 wird die gespeicherte aktuelle RF-Identifizierung von der Kennvorrichtung 1 als Antwortsignal auf das Lesesignal an die Schnittstellenvorrichtung 2 übermittelt.

Im Schritt S34 stellt die Schnittstellenvorrichtung 2 einen Datenbeleg zur Übermittlung an das Computersystem 5 respektive an den TTP-Server 3 bereit und fährt im Schritt S40 fort. Der Datenbeleg umfasst die im Schritt S33 übermittelte aktuelle (neue) RF-Identifizierung, die Dienstanbieteridentifizierung und den Authentifizierungsgrad.

Im Schritt S40 übermittelt die Schnittstellenvorrichtung 2 den je nach Ausführungsvariante im Schritt 9, 17, 25 oder 34 bereitgestellten Datenbeleg an das Computersystem 5 respektive an den TTP-Server 3, gegebenenfalls über die Steuervorrichtung 20.

Im Schritt 41 bestimmt das Verwaltungsmodul 34 auf Grund der im Datenbeleg enthaltenen Dienstanbieteridentifizierung die im Regeldatenspeicher 31 gespeicherten Verarbeitungsregeln des betreffenden Dienstanbieters.

Im Schritt S42 ermittelt das Verwaltungsmodul 34 je nach Ausführungsvariante die der Kennvorrichtung 1 zugeordnete eindeutige Referenzidentifizierung. Basierend auf der alten (früheren) RF-Identifizierung, die in den Datenbelegen enthalten ist, die in den Schritten 9 und 17 bereitgestellt wurden, wird die Referenzidentifizierung aus dem chronologischen Log 33 bestimmt. Basierend auf dem Lesecode, der im Datenbeleg enthalten ist, der im Schritt 25 bereitgestellt wurde, und basierend auf der aktuellen (neuen) RF-Identifizierung der Kennvorrichtung 1 wird die Referenzidentifizierung aus den Kenndatensätzen bestimmt, die im TTP-Server 3 den Referenzidentifizierungen der Kennvorrichtungen 1 zugeordnet gespeichert sind ("inverse Hash-Funktion"). Basierend auf der aktuellen (neuen) RF-Identifizierung, die im Datenbeleg enthalten ist, der im Schritt 34 bereitgestellt wurde, wird die Referenzidentifizierung mittels des geheimen krytpografischen Schlüssels bestimmt, der im TTP-Server 3 dem betreffenden Dienstanbieter zugeordnet gespeichert ist. Anschliessend werden die aktuelle (neue) RF-Identifizierung der Kennvorrichtung 1 und die Dienstanbieteridentifizierung zugeordnet zur ermittelten Referenzidentifizierung im chronologischen Log 33 eingetragen. Dem Eintrag werden vorzugsweise auch Zeitangaben (Uhrzeit, Datum) zugeordnet.

Im Schritt S43 wird, falls dies den Verarbeitungsregeln des betreffenden Dienstanbieters entspricht, basierend auf dem chronologischen Log, der aktuellen (neuen) RF-Identifizierung, der Referenzidentifizierung und der Dienstanbieteridentifizierung 33 für das Objekt ein dienstanbieterspezifischer Kontext ermittelt. Dabei wird untersucht, ob das betreffende Objekt mit der Kennvorrichtung 1 innerhalb eines in den Verarbeitungsregeln definierten Zeitraums mit der selben Schnittstellenvorrichtung 2 oder mit einer anderen Schnittstellenvorrichtung 2 des selben Dienstanbieters interagiert hat. Gegebenenfalls übermittelt das Computersystem 5 respektive der TTP-Server 3 im Schritt S44 die im chronologischen Log 33 gespeicherte kontextspezifische alte (frühere) RF-Identifizierung, die von der Kennvorrichtung 1 bei der Interaktion mit der betreffenden Schnittstellenvorrichtung 2 gelesen wurde, als Alias-Identifizierung an die aktuelle Schnittstellenvorrichtung 2, gegebenenfalls über die Steuervorrichtung 20. Die Alias-Identifizierung wir vorzugsweise zusammen mit anderen Daten des Computersystems 5 an die Schnittstellenvorrichtung 2 übermittelt, beispielsweise zu einem späteren Zeitpunkt in der Datenübertragung im Schritt S54. Durch die Übermittlung der Alias-Identifizierung wird ermöglicht, dass ein Objekt respektive eine Person mit seiner Kennvorrichtung 1 bei der Bearbeitung eines Verfahrensablaufs vom System des Dienstanbieters wieder erkannt wird, wenn das Objekt respektive die Person zwischenzeitlich einen anderen Dienstanbieter besucht hat. Angefangene und unterbrochene Verfahrensabläufe können so innerhalb eines begrenzten Zeitraums nahtlos fortgesetzt werden. Als einschränkende Bedingung kann neben einer definierten Zeitdauer auch eine definierte Anzahl Interaktionen der Kennvorrichtung 1 mit Schnittstellenvorrichtungen 2 aufgesetzt werden.

Abhängig von den Verarbeitungsregeln des betreffenden Dienstanbieters und abhängig vom Authentifizierungsgrad leitet der TTP-Server 3 im Schritt S46 über den MNO-Server 4 eine Datenkommunikation mit dem mobilen Kommunikationsendgerät 6 der Person, die die Kennvorrichtung 1 oder das Objekt mit der Kennvorrichtung 1 trägt. Die Datenkommunikation dient vorzugsweise für die Abfrage von Authentifizierungsinformationen von der Person, je nach Verarbeitungsregeln und Anwendung können zusätzlich oder alternativ von der Person anwendungsspezifische Daten angefragt werden. Zu diesem Zweck leitet der TTP-Server 3 im Schritt S46 die im Schritt S42 ermittelte eindeutige Referenzidentifizierung der Kennvonichtung 1 und den Authentifizierungsgrad an den MNO-Server 4.

Im Schritt S47 bestimmt das Dialogmodul 42 aus dem Teilnehmerspeicher 41 die Rufnummer des mobilen Kommunikationsendgeräts 6, die der übermittelten Referenzidentifizierung der Kennvorrichtung 1 zugeordnet ist.

Im Schritt S48 übermittelt das Dialogmodul 42 für die im Schritt 46 eingeleitete Datenkommunikation eine Datenanfrage über das Mobilfunknetz 7 an das mobile Kommunikationsendgerät 6.

Die Datenanfrage wird der Person vorzugsweise auf der Anzeige 61 des Kommunikationsendgeräts 6 angezeigt. Im Schritt S49 gibt die Person mittels der Bedienungselemente 62 ihre Antwort auf die Datenanfrage ein, beispielsweise ein Passwort, eine PIN (Personal Identification Number) und/oder anwendungsspezifische Daten wie zum Beispiel ein Bestell- oder Kaufbestätigung.

Im Schritt S50 werden die eingegebenen Daten vom mobilen Kommunikationsendgerät 6 als Antwort über das Mobilfunknetz 7 an den MNO-Server 4 respektive an das Computersystem 5 übermittelt.

Falls die empfangenen Daten Authentifizierungsinformationen enthalten, werden diese im Schritt S51 im MNO-Server 4 oder im Schritt S53 im TTP-Server 3 auf ihre Gültigkeit hin geprüft.

Im Schritt S52 werden die im Schritt S50 übermittelten Daten und/oder gegebenenfalls das Resultat der Datenüberprüfung des Schritts S51 an den TTP-Server 3 weitergeleitet.

Im Schritt S54 werden anwendungsspezifische Daten, die im Schritt S50 übermittelt wurden, und/oder gegebenenfalls das Resultat der Datenüberprüfung der Schritte S51 und/oder S53 an die Schnittstellenvorrichtung 2 weitergeleitet, gegebenenfalls über die Steuervorrichtung 20.

Im Schritt S55 gibt die Schnittstellenvorrichtung 2 der Person, die die Kennvorrichtung 1 oder das Objekt mit der Kennvorrichtung 1 trägt, abhängig von den im Schritt S54 übermittelten Daten eine Bestätigung oder gegebenenfalls eine Fehlermeldung an.

Der Fachmann kann weitere zusätzliche und/oder alternative Mechanismen und Verfahrensschrittfolgen bereitstellen um die Integrität übertragener Daten und RF-Identifizierungen zu kontrollieren und zu verifizieren. Insbesondere kann der Fachmann Funktionsmodule zur Überprüfung der Integrität empfangener RF-Identifizierungen direkt in der Kennvorrichtung 1 vorsehen.

## Patentansprüche

1. System zur Erkennung mobiler Objekte, umfassend
eine mobile tragbare Kennvorrichtung (1) mit einer darin gespeicherten kontaktlos per Funk lesbaren Identifizierung, wobei die gespeicherte Identifizierung in der Kennvorrichtung (1) dynamisch veränderbar ist,
Mittel zum Bestimmen einer neuen Identifizierung und zum Ersetzen der gespeicherten Identifizierung in der Kennvorrichtung (1) durch die bestimmte neue Identifizierung bei einer Interaktion der Kennvorrichtung (1) mit einer zur Kennvorrichtung (1) externen Schnittstellenvorrichtung(2), und
ein Computersystem (5),
**dadurch gekennzeichnet,**
**dass** die Schnittstellenvorrichtung (2) eingerichtet ist, eine zum Ersetzen verwendete neue Identifizierung an das Computersystem (5) zu übermitteln,
**dass** das Computersystem (5) von der Schnittellenvorrichtung (2) unabhängig ist, und
**dass** das Computersystem (5) eingerichtet ist, die übermittelte neue Identifizierung einer Referenzidentifizierung der Kennvorrichtung (1) zuzuordnen.

2. System nach Anspruch 1, **dadurch gekennzeichnet, dass** das System die Schnittstellenvorrichtung (2) umfasst, dass das System eine der Schnittstellenvorrichtung (2) zugeordnete Liste mit Identifizierungen umfasst, dass die Schnittstellenvorrichtung (2) eingerichtet ist, die Identifizierung in der Kennvorrichtung (1) kontaktlos zu lesen und anschliessend eine Identifizierung aus der Liste zu bestimmen und zum Ersetzen der gespeicherten Identifizierung kontaktlos per Funk als neue Identifizierung in die Kennvorrichtung (1) zu schreiben.

3. System nach Anspruch 1, **dadurch gekennzeichnet, dass** die Mittel zur Bestimmung der neuen Identifizierung und zum Ersetzen der gespeicherten Identifizierung mit der bestimmten neuen Identifizierung in der Kennvorrichtung (1) angeordnet sind und durch eine Leseinteraktion mit der zur Kennvorrichtung (1) externen Schnittstellenvorrichtung (2) aktiviert werden.

4. System nach einem der Ansprüche 2 oder 3, **dadurch gekennzeichnet, dass** das System ein Computersystem (5) umfasst, dass die Schnittstellenvorrichtung (2) eingerichtet ist, eine in der Kennvorrichtung (1) gelesene frühere Identifizierung und eine zum Ersetzen der gelesenen Identifizierung verwendete neue Identifizierung einander zugeordnet an das Computersystem (5) zu übermitteln, und dass das Computersystem (5) eingerichtet ist, die übermittelte neue Identifizierung auf Grund der zugeordneten übermittelten früheren Identifizierung einer Referenzidentifizierung zuzuordnen.

5. System nach Anspruch 3, **dadurch gekennzeichnet, dass** das System ein Computersystem (5) umfasst, dass die Schnittstellenvorrichtung (2) eingerichtet ist, eine in der Kennvorrichtung (1) gelesene neue Identifizierung an das Computersystem (5) zu übermitteln, und dass das Computersystem (5) eingerichtet ist, die übermittelte neue Identifizierung einer Referenzidentifizierung zuzuordnen.

6. System nach einem der Ansprüche 4 oder 5, **dadurch gekennzeichnet, dass** das System eine Datenstruktur umfasst, in welcher eine Rufnummer eines mobilen Kommunikationsendgeräts (6) der Referenzidentifizierung zugeordnet ist, dass das Computersystem (5) eingerichtet ist, die Referenzidentifizierung, die der übermittelten neuen Identifizierung zugeordnet ist, an eine Kommunikationseinheit zu leiten, und dass die Kommunikationseinheit eingerichtet ist, eine Datenanfrage an das mobile Kommunikationsendgerät (6) zu übermitteln, das durch die der Referenzidentifizierung zugeordnete Rufnummer bestimmt ist.

7. System nach Anspruch 4 oder 6, **dadurch gekennzeichnet, dass** die Schnittstellenvorrichtung (2) eingerichtet ist, die neue Identifizierung zusammen mit einer Dienstanbieteridentifizierung an das Computersystem (5) zu übermitteln, dass das Computersystem (5) eingerichtet ist, die übermittelte Dienstanbieteridentifizierung, die übermittelte neue Identifizierung und die zugeordnete Referenzidentifizierung einander zugeordnet als Eintrag in einem chronologischen Log (33) zu speichern, und dass das Computersystem (5) eingerichtet, ist auf Grund der übermittelten Dienstanbieteridentifizierung und auf Grund von Einträgen im chronologischen Log (33) einen Kontext zu ermitteln und aus dem chronologischen Log (33) eine kontextspezifische alte Identifizierung zu bestimmen und diese alte Identifizierung als Alias-Identifizierung für die Kennvorrichtung (1) an die Schnittstellenvorrichtung (2) zu übermitteln.

8. Verfahren zur Erkennung mobiler Objekte, umfassend:
Speichern einer Identifizierung in einer mobilen tragbaren Kennvorrichtung (1), in der die gespeicherte Identifizierung kontaktlos per Funk lesbar ist,
Bestimmen einer neuen Identifizierung (S4, S14, S23, S32), und
Ersetzen (S6') der gespeicherten Identifizierung in der Kennvorrichtung (1) **durch** die bestimmte neue Identifizierung bei einer Interaktion der Kennvorrichtung (1) mit einer zur Kennvorrichtung (1) externen Schnittstellenvorrichtung (2),
**dass** die Schnittstellenvorrichtung (2) eine zum Ersetzen verwendete neue Identifizierung an ein Computersystem (5) übermittelt (S40), dass das Computersystem (5) von der Schnittstellenvorrichtung(2) unabhängig ist, **dadurch gekennzeichnet,** und
dass im Computersystem (5) die übermittelten neue Identifizierung einer Referenzidentifizierung der Kennvorrichtung (1) zugeordnet (S42) wird.

9. Verfahren nach Anspruch 8, **dadurch gekennzeichnet, dass** die Schnittstellenvorrichtung (2) die in der Kennvorrichtung (1) gespeicherte Identifizierung kontaktlos liest (S1, S2), und dass die Schnittstellenvorrichtung (2) aus einer der Schnittstellenvorrichtung (2) zugeordneten Liste eine Identifizierung bestimmt (S4) und kontaktlos per Funk zum Ersetzen der gespeicherten Identifizierung als neue Identifizierung in die Kennvorrichtung (1) schreibt (S5, S6).

10. Verfahren nach Anspruch 8, **dadurch gekennzeichnet, dass** die Bestimmung der neuen Identifizierung (S14, S23, S32) und das Ersetzen der gespeicherten Identifizierung mit der bestimmten neuen Identifizierung durch Mittel in der Kennvorrichtung (1) ausgeführt werden, und dass diese Mittel der Kennvorrichtung (1) durch eine Leseinteraktion mit der zur Kennvorrichtung (1) externen Schnittstellenvorrichtung (2) aktiviert werden.

11. Verfahren nach einem der Ansprüche 9 oder 10, **dadurch gekennzeichnet, dass** die Schnittstellenvorrichtung (2) eine in der Kennvorrichtung (1) gelesene frühere Identifizierung und eine zum Ersetzen der gelesenen Identifizierung verwendete neue Identifizierung einander zugeordnet an ein Computersystem (5) übermittelt (S40), und dass das Computersystem (5) die übermittelte neue Identifizierung auf Grund der zugeordneten übermittelten früheren Identifizierung einer Referenzidentifizierung zuordnet (S42).

12. Verfahren nach Anspruch 10, **dadurch gekennzeichnet, dass** die Schnittstellenvorrichtung (2) eine in der Kennvorrichtung (1) gelesene neue Identifizierung an ein Computersystem (5) übermittelt (S40), und dass das Computersystem (5) die übermittelte neue Identifizierung einer Referenzidentifizierung zuordnet (S42).

13. Verfahren nach einem der Ansprüche 11 oder 12, **dadurch gekennzeichnet, dass** das Computersystem (5) die Referenzidentifizierung, die der übermittelten neuen Identifizierung zugeordnet ist, an eine Kommunikationseinheit leitet (S46), und dass die Kommunikationseinheit eine Datenanfrage an ein mobiles Kommunikationsendgerät (6) übermittelt (S48), dessen Rufnummer der Referenzidentifizierung zugeordnet ist.

14. Verfahren nach einem der Ansprüche 11 oder 13, **dadurch gekennzeichnet, dass** die Schnittstellenvorrichtung (2) die neue Identifizierung zusammen mit einer Dienstanbieteridentifizierung an das Computersystem (5) übermittelt (S40), dass das Computersystem (5) die übermittelte Dienstanbieteridentifizierung, die übermittelte neue Identifizierung und die zugeordnete Referenzidentifizierung einander zugeordnet als Eintrag in einem chronologischen Log (33) speichert, und dass das Computersystem (5) auf Grund der übermittelten Dienstanbieteridentifizierung und auf Grund von Einträgen im chronologischen Log (33) einen Kontext ermittelt (S43) und aus dem chronologischen Log (33) eine kontextspezifische alte Identifizierung bestimmt und diese alte Identifizierung als Alias-Identifizierung für die Kennvorrichtung (1) an die Schnittstellenvorrichtung (2) übermittelt (S44).

15. Schnittstellenvorrichtung (2), die eingerichtet ist zum kontaktlosen Lesen per Funk von Identifizierungen aus einer mobilen tragbaren Kennvorrichtung (1) und zum kontaktlosen Schreiben per Funk von Daten in die mobile tragbare Kennvorrichtung (1), **dadurch gekennzeichnet, dass** die Schnittstellenvorrichtung (2) Mittel umfasst zum Bestimmen einer neuen Identifizierung und zum Ersetzen der gespeicherten Identifizierung in der Kennvorrichtung (1) durch die bestimmte neue Identifizierung bei einer Interaktion der Kennvorrichtung (1) mit der Schnittstellenvorrichtung (2), und
dass die Schnittstellenvorrichtung (2) eingerichtet ist, eine zum Ersetzen verwendete neue Identifizierung an ein zur Schnittstellenvorrichtung (2) externes, von dieser unabhängiges, Computersystem (5) zu übermitteln.

16. Schnittstellenvorrichtung (2) nach Anspruch 15, **dadurch gekennzeichnet, dass** die Schnittstellenvorrichtung (2) eingerichtet ist, eine in der Kennvorrichtung (1) gelesene frühere Identifizierung und eine zum Ersetzen der gelesenen Identifizierung verwendete neue Identifizierung einander zugeordnet an ein zur Schnittstellenvorrichtung (2) externes Computersystem (5) zu übermitteln.

17. Computersystem (5) eingerichtet zur Verwendung im System nach einem der Ansprüche 1 bis 7 oder im Verfahren nach einem der Ansprüche 8 bis 14, wobei das Computersystem (5) einen Identifizierungsspeicher (32) umfasst, in welchem Identifizierungsspeicher (32) Listen mit Identifizierungen für Kennvorrichtungen (1) gespeichert sind, und wobei das Computersystem (5) eingerichtet ist aus dem Identifizierungsspeicher (32) eine Liste mit Identifizierungen für Kennvorrichtungen (1) zu bestimmen, die bestimmte Liste einem Dienstanbieter oder einer Schnittstellenvorrichtung (1) zuzuordnen, die Liste an die Schnittstellenvorrichtung (2) zu übertragen, von einer Schnittstellenvorrichtung (2) eine zum Ersetzen verwendete neue Identifizierung entgegenzunehmen, und die neue Identifizierung einer Referenzidentifizierung der Kennvorrichtung (1) zuzuordnen, wobei das Computersystem (5) von der Schnittstellenvorrichtung (2) unabhängig ist.

## Claims

1. System for detecting mobile objects, comprising:
a mobile portable identification device (1) with an identification stored therein, which can be read contactlessly by radio, wherein the stored identification can be dynamically altered in the identification device (1),
means for determining a new identification and for replacing the stored identification in the identification device (1) by the determined new identification during an interaction of the identification device (1) with an interface device (2) external to the identification device (1), and
a computer system (5),
**characterized in that**
the interface device (2) is set up for conveying to the computer system (5) a new identification used for replacing,
**in that** the computer system (5) is independent of the interface device (2), and
**in that** the computer system (5) is set up for allocating the conveyed new identification to a reference identification of the identification device (1).

2. System according to Claim 1, **characterized in that** the system comprises the interface device (2), **in that** the system comprises a list with identifications allocated to the interface device (2), **in that** the interface device (2) is set up for contactlessly reading the identification in the identification device (1) and subsequently determining an identification from the list and replacing the stored identification by contactlessly writing by radio said identification as new identification into the identification device (1).

3. System according to Claim 1, **characterized in that** the means for determining the new identification and for replacing the stored identification with the determined new identification are arranged in the identification device (1) and are activated by a read interaction with the interface device (2) external to the identification device (1).

4. System according to one of Claims 2 or 3, **characterized in that** the system comprises a computer system (5), **in that** the interface device (2) is set up for conveying an earlier identification, read in the identification device (1), and a new identification, used for replacing the read identification, allocated to one another to the computer system (5), and **in that** the computer system (5) is set up for allocating the conveyed new identification to a reference identification on the basis of the allocated conveyed earlier identification.

5. System according to Claim 3, **characterized in that** the system comprises a computer system (5), **in that** the interface device (2) is set up for conveying a new identification, read in the identification device (1), to the computer system (5), and **in that** the computer system (5) is set up for allocating the conveyed new identification to a reference identification.

6. System according to one of Claims 4 or 5, **characterized in that** the system comprises a data structure in which a call number of a mobile communication terminal (6) is allocated to the reference identification, **in that** the computer system (5) is set up for conducting the reference identification, which is allocated to the conveyed new identification, to a communication unit, and **in that** the communication unit is set up for conveying a data request to the mobile communication terminal (6) which is determined by the call number allocated to the reference identification.

7. System according to Claim 4 or 6, **characterized in that** the interface device (2) is set up for conveying the new identification, together with a service provider identification, to the computer system (5), **in that** the computer system (5) is set up for storing the conveyed service provider identification, the conveyed new identification and the associated reference identification associated with one another as entry in a chronological log (33), and **in that** the computer system (5) is set up for determining a context on the basis of the conveyed service provider identification and on the basis of entries in the chronological log (33), and for determining from the chronological log (33) a context-specific old identification and for conveying this old identification as alias identification for the identification device (1) to the interface device (2).

8. Method for detecting mobile objects, comprising:
storing an identification in a mobile portable identification device (1) in which the stored identification can be read contactlessly by radio,
determining a new identification (S4, S14, S23, S32), and
replacing (S6') the stored identification in the identification device (1) by the determined new identification during an interaction of the identification device (1) with an interface device (2) external to the identification device (1),
**characterized in that**
the interface device (2) conveys (S40) a new identification, used for replacing, to a computer system (5), **in that** the computer system (5) is independent of the interface device (2), and
**in that**, in the computer system (5), the conveyed new identification is allocated (S42) to a reference identification of the identification device (1).

9. Method according to Claim 8, **characterized in that** the interface device (2) contactlessly reads (S1, S2) the identification stored in the identification device (1), and **in that** the interface device (2) determines (S4) an identification from a list associated with the interface device (2) and contactlessly by radio writes it (S5, S6) as new identification into the identification device (1) for replacing the stored identification.

10. Method according to Claim 8, **characterized in that** the determining of the new identification (S14, S23, S32) and the replacing of the stored identification with the determined new identification are carried out by means in the identification device (1), and **in that** these means of the identification device (1) are activated by a read interaction with the interface device (2) external to the identification device (1).

11. Method according to one of Claims 9 or 10, **characterized in that** the interface device (2) conveys (S40) an earlier identification read in the identification device (1) and a new identification, used for replacing the read identification, allocated to one another to a computer system (5) and **in that** the computer system (5) allocates (S42) the conveyed new identification to a reference identification on the basis of the allocated conveyed earlier identification.

12. Method according to Claim 10, **characterized in that** the interface device (2) conveys (S40) a new identification, read in the identification device (1), to a computer system (5), and **in that** the computer system (5) allocates (S42) the conveyed new identification to a reference identification.

13. Method according to one of Claims 11 or 12, **characterized in that** the computer system (5) conducts (S46) the reference identification, which is allocated to the conveyed new identification, to a communication unit and **in that** the communication unit conveys (S48) a data request to a mobile communication terminal (6), the call number of which is allocated to the reference identification.

14. Method according to one of Claims 11 or 13, **characterized in that** the interface device (2) conveys (S40) the new identification, together with a service provider identification, to the computer system (5), **in that** the computer system (5) stores the conveyed service provider identification, the conveyed new identification and the associated reference identification associated with one another as entry in a chronological log (33), and **in that** the computer system (5) determines (S43) a context on the basis of the conveyed service provider identification and on the basis of entries in the chronological log (33) and determines from the chronological log (33) a context-specific old identification and conveys (S44) this old identification as alias identification for the identification device (1) to the interface device (2).

15. Interface device (2) which is set up for contactlessly reading identifications by radio from a mobile portable identification device (1) and for contactlessly writing data by radio into the mobile portable identification device (1), **characterized**
**in that** the interface device (2) comprises means for determining a new identification and for replacing the stored identification in the identification device (1) by the determined new identification during an interaction of the identification device (1) with the interface device (2), and
**in that** the interface device (2) is set up for conveying a new identification, used for replacing, to a computer system (5) external to the interface (2) and independent of the latter.

16. Interface device (2) according to Claim 15, **characterized in that** the interface device (2) is set up for conveying an earlier identification, read in the identification device (1), and a new identification, used for replacing the read identification, associated with one another to a computer system (5) external to the interface device (2).

17. Computer system (5) set up for use in the system according to one of Claims 1 to 7 or in the method according to one of Claims 8 to 14, wherein the computer system (5) comprises an identification memory (32) in which identification memory (32) lists with identifications for identification devices (1) are stored and wherein the computer system (5) is set up for determining from the identification memory (32) a list with identifications for identification devices (1), allocating the determined list to a service provider or an interface device (1), transmitting the list to the interface device (2), receiving a new identification, used for replacing, from an interface device (2), and allocating the new identification to a reference identification of the identification device (1), wherein the computer system (5) is independent of the interface device (2).

## Revendications

1. Système de détection d'objets mobiles, qui comprend :
un dispositif mobile portable d'identification (1) dans lequel une identification lisible à distance par radio est conservée en mémoire, l'identification conservée en mémoire pouvant être modifiée dynamiquement dans le dispositif d'identification (1),
des moyens de détermination d'une nouvelle identification et de remplacement de l'identification conservée en mémoire dans le dispositif d'identification (1) par la nouvelle identification ainsi définie, lors d'une interaction du dispositif d'identification (1) avec un dispositif d'interfaçage (2) extérieur au dispositif d'identification (1) et
un système informatique (5),
**caractérisé en ce que** :
le dispositif d'interfaçage (2) est conçu pour transmettre au système informatique (5) la nouvelle identification utilisée en remplacement,
**en ce que** le système informatique (5) est indépendant du dispositif d'interfaçage (2) et
**en ce que** le système informatique (5) est conçu pour associer la nouvelle identification qui lui a été transmise à une identification de référence du dispositif d'identification (1).

2. Système selon la revendication 1, **caractérisé en ce que** le système comprend le dispositif d'interfaçage (2), **en ce que** le système comprend une liste d'identifications associée au dispositif d'interfaçage (2), **en ce que** le dispositif d'interfaçage (2) est conçu pour lire à distance l'identification du dispositif d'identification (1) et pour ensuite déterminer son identification dans la liste et l'écrire comme nouvelle identification dans le dispositif d'identification (1), à distance et par radio, pour remplacer l'identification qui y est conservée en mémoire.

3. Système selon la revendication 1, **caractérisé en ce que** les moyens de détermination de la nouvelle identification et de l'identification conservée en mémoire par l'identification nouvellement déterminée sont disposés dans le dispositif d'identification (1) et sont activés par une interaction de lecture avec le dispositif externe d'interfaçage (2) avec le dispositif d'identification (1).

4. Système selon l'une des revendications 2 ou 3, **caractérisé en ce que** le système comprend un système informatique (5), **en ce que** le dispositif d'interfaçage (2) est conçu pour associer l'une à l'autre une identification antérieure lue dans le dispositif d'identification (1) et une nouvelle identification utilisée pour remplacer l'identification lue et pour les transmettre au système informatique (5) et **en ce que** le système informatique (5) est conçu pour associer à une identification de référence la nouvelle identification qui lui est transmise, sur base de l'identification antérieure transmise conjointement.

5. Système selon la revendication 3, **caractérisé en ce que** le système comprend un système informatique (5), **en ce que** le dispositif d'interfaçage (2) est conçu pour transmettre au système informatique (5) une nouvelle identification lue dans le dispositif d'identification (1) et **en ce que** le système informatique (5) est conçu pour associer à une identification de référence la nouvelle identification qui lui est transmise.

6. Système selon l'une des revendications 4 ou 5, **caractérisé en ce que** le système comprend une structure de données dans laquelle le numéro d'appel d'un terminal de communication mobile (6) est associé à l'identification de référence, **en ce que** le système informatique (5) est conçu pour envoyer à une unité de communication l'identification de référence qui est associée à la nouvelle identification qui lui est transmise et **en ce que** l'unité de communication est conçue pour transmettre au terminal de communication mobile (6) une demande de données qui est définie par le numéro d'appel associé à l'identification de référence.

7. Système selon les revendications 4 ou 6, **caractérisé en ce que** le dispositif d'interfaçage (2) est conçu pour transmettre au système informatique (5) la nouvelle identification en même temps que l'identification d'un fournisseur de services, **en ce que** le système informatique (5) est conçu pour associer l'identification du fournisseur de services qui lui est transmise, la nouvelle identification qui lui est transmise et l'identification de référence associée et pour les conserver comme entrée dans un registre chronologique (33) et **en ce que** le système informatique (5) est conçu pour, sur base de l'identification du fournisseur de services qui lui est transmise et sur base des entrées dans le registre chronologique (33), déterminer un contexte, définir à partir du registre chronologique (33) une ancienne identification spécifique au contexte et transmettre au dispositif d'interfaçage (2) cette ancienne identification comme identification d'alias du dispositif d'identification (1).

8. Procédé de détection d'objets mobiles, qui comprend les étapes qui consistent à :
conserver une identification en mémoire dans un dispositif d'identification mobile portable (1), l'identification conservée en mémoire pouvant être lue à distance par radio,
déterminer une nouvelle identification (S4, S14, S23, S32) et
par une interaction du dispositif d'identification (1) avec un dispositif d'interfaçage (2) extérieur au dispositif d'identification (1), remplacer (S6') de l'identification conservée en mémoire dans le dispositif d'identification (1) par l'identification nouvellement définie,
**caractérisé en ce que**
le dispositif d'interfaçage (2) transmet à un système informatique (5) une nouvelle identification utilisée en remplacement,
**en ce que** le système informatique (5) est indépendant du dispositif d'interfaçage (2)
et **en ce que** dans le système informatique (5), l'identification nouvellement déterminée est associée à une identification de référence du dispositif d'identification (1).

9. Procédé selon la revendication 8, **caractérisé en ce que** le dispositif d'interfaçage (2) lit à distance (S1, S2) l'identification conservée en mémoire dans le dispositif d'identification (1) et **en ce que** le dispositif d'interfaçage (2) définit (S4) une identification à partir d'une liste associée au dispositif d'interfaçage (2) et l'écrit (S5, S6) comme nouvelle identification dans le dispositif d'interfaçage (1), à distance et par radio, pour remplacer l'identification qui est conservée en mémoire.

10. Procédé selon la revendication 8, **caractérisé en ce que** la détermination de la nouvelle identification (S14, S23, S32) et le remplacement de l'identification conservée en mémoire par l'identification nouvellement définie est réalisée par des moyens prévus dans le dispositif d'identification (1) et **en ce que** ces moyens du dispositif d'identification (1) sont activés par une interaction de lecture avec le dispositif d'interfaçage (2) situé à l'extérieur du dispositif d'identification (1).

11. Procédé selon l'une des revendications 9 ou 10, **caractérisé en ce que** le dispositif d'interfaçage (2) associe mutuellement une identification antérieure lue dans le dispositif d'identification (1) et une nouvelle identification utilisée pour remplacer l'identification lue et les transmet (S40) à un système informatique (5) et **en ce que** sur base de l'identification antérieure associée qui lui est transmise, le système informatique (5) associe à une identification de référence (S42) la nouvelle identification qui lui est transmise.

12. Procédé selon la revendication 10, **caractérisé en ce que** le dispositif d'interfaçage (2) transmet (S40) à un système informatique (5) une nouvelle identification lue dans le dispositif d'identification (1) et **en ce que** le système informatique (5) associe (S42) à une identification de référence la nouvelle identification qui lui est transmise.

13. Procédé selon l'une des revendications 11 ou 12, **caractérisé en ce que** le système informatique (5) envoie (S46) à une unité de communication l'identification de référence qui est associée à la nouvelle identification qui lui est transmise et **en ce que** l'unité de communication transmet (S48) une demande de données à un terminal de communication mobile (6) dont le numéro d'appel est associé à l'identification de référence.

14. Procédé selon l'une des revendications 11 ou 13, **caractérisé en ce que** le dispositif d'interfaçage (2) transmet (S40) au système informatique (5) la nouvelle identification en même temps qu'une identification de fournisseur de services, **en ce que** le système informatique (5) associe l'identification du fournisseur de services, la nouvelle identification qui lui est transmise et l'identification de référence qui y est associée et les conserve en mémoire comme entrée dans un registre chronologique (33), et **en ce que** sur base de l'identification de fournisseur de services qui lui est transmise et sur base des entrées dans le registre chronologique (33), le système informatique (5) détermine (S43) un contexte, détermine à partir du registre chronologique (33) une ancienne identification spécifique au contexte et transmet (S44) au dispositif d'interfaçage (2) cette ancienne identification comme identification d'alias du dispositif d'identification (1).

15. Dispositif d'interfaçage (2) conçu pour lire à distance et par radio des identifications dans un dispositif mobile portable d'identification (1) et pour lire à distance et par radio des données dans le dispositif mobile portable d'identification (1), **caractérisé en ce que** le dispositif d'interfaçage (2) contient des moyens qui, par interaction entre le dispositif d'identification (1) et le dispositif d'interfaçage (2), déterminent une nouvelle identification et remplacent l'identification conservée en mémoire dans le dispositif d'identification (1) par l'identification nouvellement définie et **en ce que** le dispositif d'interfaçage (2) est conçu pour transmettre la nouvelle identification utilisée pour remplacer l'ancienne à un système informatique (5) situé à l'extérieur du dispositif d'interfaçage (2) indépendant de ce dernier.

16. Dispositif d'interfaçage (2) selon la revendication 15, **caractérisé en ce que** le dispositif d'interfaçage (2) est conçu pour associer mutuellement une identification antérieure lue dans le dispositif d'identification (1) et une nouvelle identification utilisée pour remplacer l'identification lue et pour les transmettre à un système informatique (5) situé à l'extérieur du dispositif d'interfaçage (2).

17. Système informatique (5) conçu pour être utilisé dans le système selon l'une des revendications 1 à 7 ou dans le procédé selon l'une des revendications 8 à 14, le système informatique (5) comprenant une mémoire d'identification (32), des listes d'identifications de dispositifs d'identification (1) étant conservées en mémoire dans la mémoire d'identification (32) et le système informatique (5) étant conçu pour définir à partir de la mémoire d'identification (32) une liste d'identifications de dispositifs d'identification (1), pour associer la liste ainsi définie à un fournisseur de service ou à un dispositif d'interfaçage (2), pour transmettre la liste au dispositif d'interfaçage (2), pour recevoir d'un dispositif d'interfaçage (2) une nouvelle identification utilisée en remplacement et pour associer la nouvelle identification à une identification de référence du dispositif d'identification (1), le système informatique (5) étant indépendant du dispositif d'interfaçage (2).
